# EUROPÄISCHE PATENTANMELDUNG

(11) **EP 4 494 478 A1**
(43) Veröffentlichungstag der Anmeldung: **22.01.2025**
(21) Anmeldenummer: 24188388.3
(22) Anmeldetag: 12.07.2024
(51) Int. Cl.: A23J 3/16, A23J 3/22, A23J 3/26, A23K 10/30, A23K 20/163, A23K 20/179, A23K 50/45, A23K 50/48, A23L 29/262, A23P 30/20

(54) **VEGANER FLEISCHERSATZ**

(30) Priorität: 18.07.2023 DE 102023118995
(71) Anmelder: Landguth Heimtiernahrung GmbH, 26632 Ihlow / Riepe (DE)
(72) Erfinder: Böschen, Alina, 26632 Ihlow / Riepe (DE); Kruse, Fabian, 26632 Ihlow / Riepe (DE); Ommen, Kerstin, 26632 Ihlow / Riepe (DE); Trofimow, Slawa, 26632 Ihlow / Riepe (DE)
(74) Vertreter: Eisenführ Speiser

(57) **Zusammenfassung**

Beschrieben wird ein veganer Fleischersatz, umfassend 30 - 60 Gew% bezogenen auf das Gesamtgewicht des Fleischextraktes hydratisiertes Texturat mit Stücken bestimmter Mindeststücklänge. Die Erfindung betrifft ferner die Verwendung eines entsprechenden veganen Fleischersatzes als Bestandteil eines Tierfutters, insbesondere eines Hundes- oder Katzenfutters sowie ein Verfahren zur Herstellung eines erfindungsgemäßen veganen Fleischersatzes.

## Beschreibung

Die vorliegende Anmeldung betrifft einen veganen Fleischersatz, umfassend 30 - 60 Gew% bezogenen auf das Gesamtgewicht des Fleischextraktes hydratisiertes Texturat, wobei das hydratisierte Texturat eine bestimmte Mindestlänge besitzt. Die Erfindung betrifft ferner die Verwendung eines entsprechenden veganen Fleischersatzes als Bestandteil eines Tierfutters, insbesondere eines Hundes- oder Katzenfutters sowie ein Verfahren zur Herstellung eines erfindungsgemäßen veganen Fleischersatzes.

Es besteht aufgrund ethischer und ökonomischer Überlegungen ein ständiger Bedarf, Fleischprodukte durch vom Verbraucher akzeptierte Ersatzprodukte zu ersetzen. So lassen sich einerseits die Problematiken, die insbesondere mit der Massentierhaltung einhergehen, vermeiden, andererseits ist es in den meisten Fällen auch aus ökologischen Gesichtspunkten heraus vorteilhaft, tierische Produkte durch Produkte aus anderen Quellen zu ersetzen. Dabei gibt es auch im Markt einen steigengen Bedarf an vollständig veganen Produkten.

In der WO 2016 055 940 A1 wird die Herstellung von Nicht-Fleischprodukten beschrieben. Es fehlen aber wesentliche Angaben für eine vorteilhafte Ausgestaltung des Produktes selbst.

Vor diesem Hintergrund war es Aufgabe der vorliegenden Erfindung einen vollständig veganen Fleischersatz bereitzustellen, der von den Konsumenten akzeptiert wird. Dabei war es bevorzugt Ziel der vorliegenden Aufgabe, einen Fleischersatz bereitzustellen, der insbesondere von allesfressenden, bevorzugt fleischfressenden, Heimtieren, ganz besonders von Hunden und Katzen und am meisten von Hunden akzeptiert und/oder ähnlich wie Fleischprodukte bevorzugt wird.

Diese Aufgabe wird gelöst durch einen veganen Fleischersatz, umfassend 20 bis 30 Gew- % bezogen auf das Gesamtgewicht des Fleischersatzes hydratisiertes Texturat, wobei das hydratisierte Texturat einen Wasseranteil von 65 - 80 Gew% bezogen auf das hydratisierte Texturat umfasst, und wobei das hydratisierte Texturat eine durchschnittliche Stücklänge von ≥ 15 mm, bevorzugt ≥ 20 mm besitzt.

Texturat im Sinne des vorliegenden Textes wird auch als texturiertes Pflanzenprotein bezeichnet und ist aus seiner ursprünglich globuläre Struktur in eine fleischartige Faserstruktur überführtes pflanzliches Eiweiß. Damit muss zur Erzielung dieser Strukturveränderung zunächst unter Lösung der intermolekularen Wechselwirkung eine Auffaltung der Peptidketten der globulären Proteine (Sphäroproteine) erfolgen und dann müssen die gestreckten Peptidketten durch Ausbildung intermolekularer Wechselwirkungen stabilisiert werden. Als bevorzugte Ausführungsmaterialien können Protein aus Soja, Weizen, Erdnuss, Sesam, Raps und/oder Hefe verwendet werden. Die Umwandlung in Texturat kann bevorzugt aus zwei Verfahren erreicht werden:
a) per Spinnprozess, dabei wird Ausgangsprotein aufgelöst und durch eine Spinndüse in geeignete, die Koagulation auslösende Fallbäder gepresst. Beim anschließenden Aufwickeln werden die Proteinfaser gestreckt und zu Bündeln von 10 - 20 mm Durchmesser zusammengefasst, wobei die Ausbildung intermolekularer Wechselwirkungen mechanische Festigkeit der Faserbündel erhöht. Nach weiteren Nachbehandlungsschritten werden die präparierten Faserbündel erhitzt und geschnitten.
b) per Extrusionsprozess, dabei wird das feuchte Ausgangsprotein in einem Extruder bei hohem Druck und hoher Temperatur starken Scherkräften ausgesetzt, durch die eine partielle Auffaltung und Streckung der globulären Proteine erfolgt, die sich anschließend in Fließrichtung anordnen. Gegenüber dem Spinnprozess führt der Extrusionsprozess allerdings nicht zu echten Fasern, sondern nur zu faserartigen Partikeln. Dennoch ist im Sinne der vorliegenden Anmeldung bevorzugt das Texturat auf diese Weise hergestellt worden.

Vegan im Sinne des vorliegenden Textes bedeutet, dass das Produkt vollständig frei von tierischen Bestandteilen ist.

Ein Fleischersatz im Sinne des vorliegenden Textes ist ein Produkt, dass so eingesetzt wird, wie üblicherweise fleischhaltige und / oder fischhaltige Produkte.

"Hydratisiertes" Texturat im Sinne des vorliegenden Textes ist dabei Texturat, nach einem Quellvorgang in Wasser.

Die Stücklänge von Texturatstücken wird bestimmt durch Messung der längsten Gerade innerhalb des einzelnen Texturatstückes. Dabei werden für die Bestimmung der durchschnittlichen Länge Texturatstücke nicht berücksichtigt, die durch einen Schneideprozess verkürzt wurden. Die Längenangaben beziehen sich auf hydratisiertes Texturat sofern nicht anders angegeben.

Die "durchschnittliche" Stücklänge im Sinne des vorliegenden Textes (hier insbesondere für das Texturat) wird bestimmt als das arithmetische Mittel der jeweiligen Stücklänge.

Als weiter bevorzugt hat sich ein erfindungsgemäßer veganer Fleischersatz herausgestellt, wobei das Texturat Stücke einer durchschnittlichen Stücklänge von ≥ 25 mm weiter bevorzugt ≥ 28 mm besitzt, wenn das Texturat eingemischt wird. Bei bestimmten Herstellungsverfahren wie z.B. dem Extrahieren, kann dann eine Verkürzung der Stücklänge erfolgen.

Der erfindungsmäße vegane Fleischersatz hat sich überraschenderweise als besonders gut von den Verbrauchern akzeptiert herausgestellt, insbesondere von Tieren und hier ganz besonders von Hunden. Dabei werden sogar Akzeptanzraten erreicht, die Fleischprodukten nahekommen.

Dabei scheint - ohne an eine Theorie gebunden zu sein - die eingesetzte Stücklänge des Texturates besonders geeignet zu sein.

Bevorzugt ist in diesem Zusammenhang, dass die mittlere Stücklänge des Texturates ≤ 50 mm, weiter bevorzugt ≤ 40 mm ist.

Bevorzugt ist ein erfindungsgemäßer veganer Fleischersatz, wobei das Texturat Sojaprotein-Texturat ist.

Es hat sich herausgestellt, dass diese Form des Texturates einerseits technisch besonders gut einsetzbar ist, andererseits aber auch über hohe Akzeptanzwerte bei den Zielverbrauchern, insbesondere Tieren und ganz besonders Hunden verfügt.

Erfindungsgemäß bevorzugt ist ein erfindungsgemäßer Fleischersatz, umfassend 20 bis 30 Gew-% bezogen auf das Gesamtgewicht des Fleischersatzes weiteres pflanzliches Protein.

Die bevorzugte Menge an pflanzlichem Protein ist einerseits für die Akzeptanzwerte gut, andererseits erfüllt sie ernährungsphysiologische Anforderungen in einem hohen Maße.

Erfindungsgemäß bevorzugt ist ein erfindungsgemäßer veganer Fleischersatz, wobei das weitere Protein aus Sojaprotein, bevorzugt aus Sojaproteinisolat besteht.

Der Einsatz von Sojaprotein ist schon deshalb vorteilhaft, da Sojaprotein breit verfügbar ist. Zudem zeigt es bei den Verbrauchern gute Akzeptanzwerte, ist gut verarbeitbar und hat insbesondere in Kombination mit der bevorzugten Variante, dass das Texturat Sojaprotein ist, den Vorteil, dass nur eine Proteinquelle für den erfindungsgemäßen veganen Fleischersatz eingesetzt wird.

Bevorzugt ist ein erfindungsgemäßer veganer Fleischersatz, umfassend 5 bis 12 Gew-% bezogen auf das Gesamtgewicht des Fleischersatzes pflanzliches Öl, bevorzugt Sonnenblumenöl.

Es hat sich gezeigt, dass die bevorzugten Ölmengen, insbesondere in Form von Sonnenblumenöl, dem Produkt bei guter Verfügbarkeit gute Nährwerte einerseits und andererseits gute Akzeptanzwerte vermitteln.

Erfindungsgemäß bevorzugt ist ein erfindungsgemäßer veganer Fleischersatz, umfassend 0,4 bis 3 Gew-% bevorzugt 0,5 - 2,5 Gew-% bezogen auf das Gesamtgewicht des Fleischersatzes eines Verdickungsmittels, bevorzugt Methycellulose.

Das Verdickungsmittel in den entsprechenden Mengen führt dazu, dass die erfindungsgemäßen veganen Fleischersatzprodukte eine beim Zielverbraucher, insbesondere bei Tieren, besonders gute Akzeptanz erzeugen.

Erfindungsgemäß bevorzugt ist ein erfindungsgemäßer veganer Fleischersatz, umfassend ein Färbungsmittel aus natürlichen Quellen, bevorzugt Apfelextrakt und/oder Tomatenpulver.

Mit einer entsprechenden Färbung ist es möglich, optisch unterschiedliche Eindrücke zu erzeugen, insbesondere dann, wenn verschieden gefärbte erfindungsgemäße Fleischersatzprodukte gemeinsam eingesetzt werden. Dann ist es möglich, beispielsweise rein optisch zwei Fleischsorten zu imitieren. Dies kann - je nach Produkt - zu einer erhöhten Akzeptanz beim Verbraucher führen. Dies ist insbesondere auch dann der Fall, wenn es sich bei dem Endprodukt um ein Futtermittel handelt, da in solchen Fällen nicht nur die Akzeptanz beim Endverbraucher (die der Tiere, für die das Futtermittel gedacht ist) notwendig ist, sondern auch bei demjenigen, der das Futter für das Tier kauft, also im Regelfall bei dem Tierhalter.

Erfindungsgemäß bevorzugt ist ein erfindungsgemäßer veganer Fleischersatz in Form eines Extrudates.

Durch ein Extrusionsverfahren ist es möglich, den erfindungsgemäßen Fleischersatz in besonders günstiger Form und Textur herzustellen. Es hat sich gezeigt, dass Extrudate bei den Zielverbrauchern des Fleischersatzes besonders gut akzeptiert werden.

Bevorzugt ist, dass der erfindungsgemäße vegane Fleischersatz ohne Konservierungsmittel und/oder ohne künstliche Farbstoffe hergestellt ist.

Bevorzugt ist, dass der erfindungsgemäße vegane Fleischersatz lediglich aus den Bestandteilen Öl, hydratisiertes Texturat, pflanzliches Protein, Verdickungsmittel und Wasser besteht, wobei weiter bevorzugt ist, dass sowohl das Texturat, als auch das pflanzliche Protein auf Sojabasis hergestellt wurden.

Alternativ ist es in einigen Fällen bevorzugt, dass außer den vorgenannten Bestandteilen noch Nährstoffe, insbesondere Vitamine und Mineralstoffe, gegebenenfalls mit einem Trägermaterial für diese Stoffe als weiterer Bestandteil im erfindungsgemäßen veganen Fleischersatz enthalten sind.

Erfindungsgemäß bevorzugt ist ferner, dass der erfindungsgemäße vegane Fleischersatz frei von Gluten ist.

Teil der Erfindung ist auch die Verwendung eines erfindungsgemäßen veganen Fleischersatzes, insbesondere in Form der oben beschriebenen bevorzugten Varianten, als Bestandteil eines Tierfutters, insbesondere eines Hunde- und Katzenfutters.

Es hat sich herausgestellt, dass der erfindungsgemäße vegane Fleischersatz bei Tieren sehr gute Akzeptanz findet, dies gilt insbesondere für Hunde und Katzen und ganz besonders für Hunde.

Teil der Erfindung ist auch im Verfahren zur Herstellung eines erfindungsgemäßen veganen Fleischersatzes, insbesondere auch in den oben beschriebenen bevorzugten Varianten, umfassend die Schritte
a) Bereitstellen eines Verdickungsmittels, bevorzugt umfassend oder bestehend aus Methylcellulose,
b) Suspendieren des Verdickungsmittels mittels Wasser und Öl zu einer homogenen Suspension,
c) ggf. Hinzumischen weiterer Feststoffe nach Schritt b)
d) Hinzumischen von Texturat wie weiter oben definiert, wobei eine knetfähige Masse gebildet wird, und
e) Extrudieren der knetfähigen Masse zu dem veganen Fleischersatz.

Im Sinne dieses Textes bedeutet "knetfähige Masse", dass die jeweilige Masse in einem Viskositätszustand vorliegt, in dem eine reversible händische oder maschinelle Verformung möglich ist, wobei nach einer Verformung die Form unter Normalbedingungen gehalten wird, sofern keine weiteren mechanischen Einflüsse auf die Masse ausgeübt werden.

Es hat sich herausgestellt, dass es mit dem erfindungsgemäßen Verfahren besonders gut möglich ist, den erfindungsgemäßen veganen Fleischersatz herzustellen, dabei ist es bevorzugt, dass die Schritte b) bis d) in einem Kutter erfolgen. Dabei ist es besonders bevorzugt, dass im Schritt d), nämlich dem Hinzumischen von Texturat, der Kutter im Rückwärtslauf betrieben wird, so ist nämlich gewährleistet, dass die ideale Textur, insbesondere die erfindungsgemäße vorgesehene Stücklänge des Texturates aufrechterhalten wird. Erfindungsgemäß bevorzugt ist, dass nach dem Extrudieren das erfindungsgemäße Produkt schneidfähig ist, was bedeutet, dass nach einem Scheideprozess die (geschnittene) Form aufrechterhalten wird.

Des Weiteren ist ein erfindungsgemäßes Verfahren bevorzugt, wobei es einen weiteren Schritt f) gibt, nämlich Schneiden der extrudierten Masse zu Einzelstücken.

Mit diesem Schritt entstehen fleischartige Stücke, die insbesondere in Tierfutter besonders gut eingesetzt werden können.

Bevorzugt in diesem Zusammenhang ist, dass die Einzelstücke wenigstens eine Kantenlänge, bevorzugt wenigstens zwei Kantenlängen im Bereich von 1,5 - 5 cm besitzen, bevorzugt 3 - 4 cm für eine Kantenlänge und 1 - 3 cm für eine andere. Bevorzugte Dicke der Einzelstücke ist dabei 0,3 - 0, 7cm, bevorzugt 0,4 - 0,6 cm.

Beispiel 1: Herstellung eines erfindungsgemäßen veganen Fleischersatzes

### Produktzusammensetzung

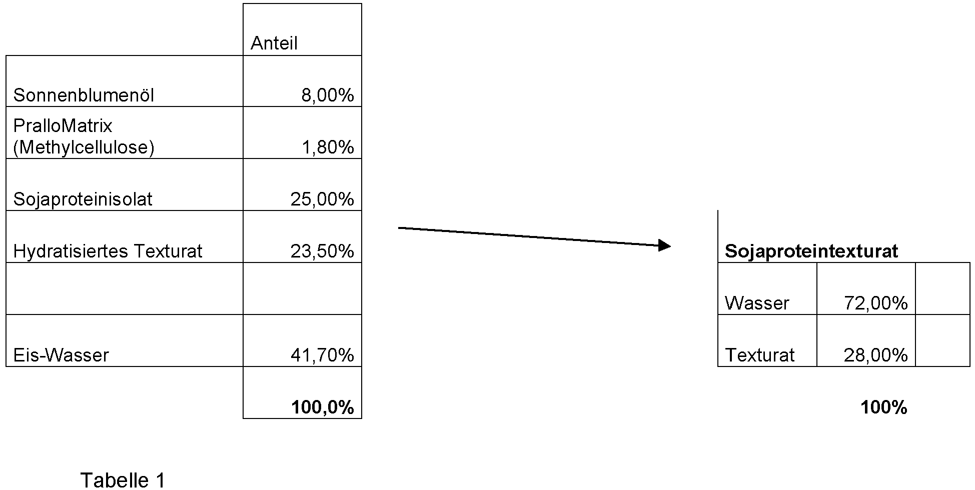

### Die Methylcellulose (PralloMatrix) (PRALLO^{®} Matrix V - MARKLAND Ingredients GmbH)

wird mit kaltem Wasser und Öl (SUNFLOWER OIL, REFINED - Henry Lamotte oils GmbH) mithilfe eines Seydelmann Kutters K 64 AC-8 Va zu einer homogenen Suspension verarbeitet. Als nächstes werden alle restlichen Trockenstoffe zum Kutter hinzugegeben. Die Masse wird gemischt. Daraufhin werden die Proteintexturate (Sojatexturat (Soytexture Slices S) - Soy Austria GmbH) hinzugegeben. Um die Texturate unterzumischen, wird der Kutter auf den Rückwärtsgang gestellt. Die fertige Masse wird daraufhin in einen 300I Normwagen gefördert.

Der Normwagen wird dem Vakuumfüller der Firma Vemag, PP20E zugegeben. Dieser fördert die Masse kontinuierlich mit einem eingestellten Druck 12-16 bar bei 8-10°C dem PowerHeater zu.

Im PowerHeater PH100-5 sind fünf Schnecken, die mit einer eingestellten Geschwindigkeit das Produkt fördern. Die Temperatur im Inneren der Anlage wird durch Zugabe von Dampf geregelt. Durch das Zusammenspiel des Druckes und der Temperatur, wird aus der Knetmasse ein langer Streifen, welcher eine Fleischoptik hat.

Diese Streifen werden anschließend mit Rasiermesser und einem Schneidwerkzeug (FlexiCut) in nicht genormte Stücke geschnitten. Diese Stücke werden direkt nach dem Schneideprozess auf max. 6°C mit einem Wendelfroster heruntergekühlt und eingelagert. Die Maße der Stücke sind ca. 5x2,3x0,5cm.

### Beispiel 2:

### Beispiel 2 Akzeptanztest

Die Fleischersatzprodukte aus dem Beispiel werden zu einem Fertigprodukt gemischt mit folgenden Bestandteilen:
- 35,00%: erfindungsgemäßer veganer Fleischersatz aus Beispiel 1
- 4,00%: Möhren
- 5,00%: Kartoffeln
- 2,00%: Erbsen
- 1,50%: Sonnenblumenöl
- 50,24%: Wasser
- 0,10%: Agar Agar (Agar Agar, Ter Ingredients GmbH & Co.KG)
- 0,50%: Guar Gum (Guar Gum Powder Food Grade - Guaran Chemicals Private Limited)
- 0,20%: Calciumcarbonat
- 0,10%: Natriumtripolyphosphat
- 0,20%: Natural Chicken Flavour (Vegetaste 007 Natural Chicken Flavour, Solina Belgium AG/NV)
- 0,02%: Taurin
- 0,04%: L-Carnitin

Die veganen Fleischersatzstücke aus Beispiel 1 wurden in den geschnittenen Stücken eingesetzt und mittels eines Paddelmischers mit den Trockenstoffen und dem Wasser vermischt, bis eine Masse entstand, in der die veganen Fleischersatzstücke homogen verteilt waren. Um die gewünschte Viskosität zu erreichen, wurden die oben aufgeführten Fertigungsmitteln einschließlich des Öls hinzugegeben, es ergab sich eine Masse mit stückigen Fleischersatzteilen mit einer typischen Optik von Hundefutter.

Für die Akzeptanztests wurde je ein Testprodukt vor ein Tier (hier einen Hund) gesetzt. Getestet wurde die oben beschrieben Mischung (Muster 4) gegen ein Produkt, das statt des erfindungsgemäßen Fleischersatzes echtes Huhn (Fleisch und Innereien) enthielt. Im Napf befindet sich ca. ein Tagesbedarf des Tieres, wobei der Bedarf abhängig vom Gewicht des Hundes und der Hundegröße festgesetzt wird.

Es wurden insgesamt 52 Testtiere (Haushaltshunde) über vier Tage gefüttert. Die Ergebnisse der Akzeptanztests sind in der nachfolgenden Tabelle aufgeführt:

| | Tag 1 | | | | Tag 2 | | | | Tag 3 | | | | Tag 4 | | | |
|---|---|---|---|---|---|---|---|---|---|---|---|---|---|---|---|---|
| | Muster 2 | | Muster 4 | | Muster 2 | | Muster 4 | | Muster 2 | | Muster 4 | | Muster 2 | | Muster 4 | |
| | n | % | n | % | n | % | n | % | n | % | n | % | n | % | n | % |
| 0 = fraß es gar nicht gern | 7 | 13% | 4 | 8°,6 | 4 | 8°,6 | 9 | 17% | 4 | 8°,6 | 11 | 21% | 6 | 12% | 15 | 29% |
| Skala 1 - 4 | | | 12 | 23% | 3 | 6% | 9 | 17% | 2 | 4°,6 | 8 | 15% | 2 | 4°,6 | 6 | 12% |
| Skala 5 -9 | 37 | 71% | 24 | 46% | 35 | 67% | 28 | 54°,6 | 34 | 65% | 24 | 46% | 33 | 63% | 22 | 42% |
| 10= fraß es sehr gern | 8 | 15% | 12 | 23% | 10 | 19% | 6 | 12% | 12 | 23% | 9 | 17% | 11 | 21% | 9 | 17% |

| | Tag 1 | | Tag 2 | | Tag 3 | | Tag 4 | |
|---|---|---|---|---|---|---|---|---|
| | Muster 2 | Muster 4 | Muster 2 | Muster 4 | Muster 2 | Muster 4 | Muster 2 | Muster 4 |
| Mittelwert | 7,0 | 6,2 | 7,0 | 5,7 | 7,1 | 5,7 | 6,9 | 5,3 |

Im Ergebnis zeigte sich, dass die Tiere eine hohe Akzeptanz für die Testmischung zeigten, die gegenüber dem fleischhaltigen Muster nur nicht-signifikant geringer war. Dies ist für Hunde, die üblicherweise Fleischprodukte bevorzugen ein überraschend gutes Ergebnis.

## Patentansprüche

1. Veganer Fleischersatz, umfassend 20 bis 30 Gew-% bezogen auf das Gesamtgewicht des Fleischersatzes hydratisiertes Texturat, wobei das hydratisierte Texturat einen Wasseranteil von 65 - 80 Gew% bezogen auf das hydratisierte Texturat umfasst, und wobei das hydratisierte Texturat eine durchschnittliche Stücklänge von ≥ 15 mm , bevorzugt ≥ 20 mm besitzt.

2. Veganer Fleischersatz nach Anspruch 1, wobei das Texturat Sojaproteintexturat ist.

3. Veganer Fleischersatz nach Anspruch 1 oder 2, umfassend 20 bis 30 Gew-% bezogen auf das Gesamtgewicht des Fleischersatzes weiteres pflanzliches Protein.

4. Veganer Fleischersatz nach einem der vorangehenden Ansprüche, wobei das weitere Protein aus Sojaprotein, bevorzugt aus Sojaproteinisolat besteht.

5. Veganer Fleischersatz nach einem der vorangehenden Ansprüche, umfassend 5 bis 12 Gew-% bezogen auf das Gesamtgewicht des Fleischersatzes pflanzliches Öl, bevorzugt Sonnenblumenöl.

6. Veganer Fleischersatz nach einem der vorangehenden Ansprüche, umfassend 0,4 bis 3 Gew-% bevorzugt 0,5 - 2,5 Gew-% bezogen auf das Gesamtgewicht des Fleischersatzes eines Verdickungsmittels, bevorzugt Methylcellulose.

7. Veganer Fleischersatz nach einem der vorangehenden Ansprüche, umfassend ein Färbungsmittel aus natürlichen Quellen, bevorzugt Apfelextrakt, und/oder Tomatenpulver.

8. Veganer Fleischersatz nach einem der vorangehenden Ansprüche in Form eines Extrudates.

9. Verwendung eines veganen Fleischersatzes nach einem der vorangehenden Ansprüche als Bestandteil eines Tierfutters, insbesondere eines Hunde- oder Katzenfutters.

10. Verfahren zur Herstellung eines veganen Fleischersatzes nach einem der Ansprüche 1-8, umfassend die Schritte:
a) Bereitstellen eines Verdickungsmittels, bevorzugt umfassend oder bestehend aus Methylcellulose,
b) Suspendieren des Verdickungsmittels mittels Wasser und Öl zu einer homogenen Suspension,
c) ggf. Hinzumischen weiterer Feststoffe nach Schritt b)
d) Hinzumischen von Texturat wie in einem der Ansprüche 1 oder 2 definiert, wobei eine knetfähige Masse gebildet wird, und
e) Extrudieren der knetfähigen Masse zu dem veganen Fleischersatz.

11. Verfahren nach Anspruch 10, umfassend ferner den Schritt f) Schneiden der extrudierten Masse zu Einzelstücken.

12. Verfahren nach Anspruch 10 oder 11, wobei die Schritte b) bis d) in einem Kutter erfolgen und wobei bevorzugt im Schritt d) der Kutter im Rückwärtslauf betrieben wird.
